# EUROPÄISCHE PATENTSCHRIFT

(11) **EP 2 086 338 B1**
(45) Veröffentlichungstag und Bekanntmachung des Hinweises auf die Patenterteilung: **10.03.2010**
(21) Anmeldenummer: 07728875.1
(22) Anmeldetag: 08.05.2007
(51) Int. Cl.: A22C 13/00

(54) **VERSTÄRKUNGSHÜLLE, INSBESONDERE FÜR WURSTWAREN**
REINFORCING CASING, ESPECIALLY FOR SAUSAGE PRODUCTS
ENVELOPPE DE RENFORCEMENT, EN PARTICULIER POUR DES PRODUITS DE CHARCUTERIE

(30) Priorität: 26.10.2006 DE 202006016404 U
(43) Veröffentlichungstag der Anmeldung: 12.08.2009
(73) Patentinhaber: Langendorf Textil GmbH & Co. KG, 96364 Marktrodach (DE)
(72) Erfinder: NAGEL, Edgar, 96268 Mitwitz (DE); DEHLER, Ernst, 95365 Rugendorf (DE)
(74) Vertreter: Pröll, Jürgen
(86) Internationale Anmeldenummer: PCT/EP2007/054422
(87) Internationale Veröffentlichungsnummer: WO 2008/049649

(56) Entgegenhaltungen:
- DE-B- 1 222 398
- DE-B1- 2 546 278
- DE-U- 1 711 779
- DE-U- 1 806 919

## Beschreibung

Die Erfindung betrifft eine Verstärkungshülle als maschinell gefertigtes, schlauchförmiges, gitterartiges Netzgeflecht, dessen aus mindestens zwei Fäden gebildete Gitterstäbchen an den Kreuzungsstellen miteinander verbunden sind, wobei die Gitterstäbchen sich in Längs- und Querrichtung zum eingeführten runden und gestreckten Füllkörper erstrecken.

Eine Verstärkungshülle der gattungsgemäßen Art ist aus der DE 1 798 085 U1 oder DE-1 222 398 bekannt. Solche Verstärkungshüllen werden insbesondere über Dauerwurstwaren, wie beispielsweise Zervelatwurst oder dergleichen, gezogen, die in darm- oder schlauchartigen Hüllen verfüllt sind.

Die Verstärkungshülle besteht aus einem netzartigen textilen Fadenverbund. Die Verstärkungshüllen sind insbesondere vorgesehen, um ein Aufeinanderstapeln der Wurstwaren zum Zwecke des Transportes zu ermöglichen. Die Verstärkungshüllen verhindern, dass die darmartigen oder schlauchartigen Hüllen der unteren Wurstwaren durch das Gewicht der aufliegenden gestapelten Wurstwaren platzen. Des Weiteren wird die Wurstware in gestreckter Form gehalten und kann auch bei größerem Gewicht aufgehängt werden, ohne dass die Hülle beschädigt wird. Aus der Schrift ist es ferner bekannt, derartige Verstärkungshüllen aus sogenannten handgeknüpften Mailänder Netzen oder aber auch maschinell anzufertigen. Hierzu ist die Verstärkungshülle als maschinell gefertigtes, schlaüchförmiges gitterartiges Netzgeflecht ausgebildet, dessen durch mindestens zwei Fäden gebildete Gitterstäbchen an den Kreuzungsstellen miteinander verbunden sind. Hierdurch ergibt sich die Möglichkeit einer wesentlich billigeren Fertigung und Anpassung an die verschiedenen Größen und Arten der Wurstwaren, insbesondere der Dauerwurstwaren. Die Gitterstäbchen können dabei diagonal verlaufen, derart, dass ihre Kreuzungspunkte an einer in Längsrichtung der Wurstware sich erstreckenden Reihe angeordnet und untereinander durch ein in Längsrichtung der Wurstware sich erstreckendes weiteres Gitterstäbchen miteinander verbunden sind, wodurch die Möglichkeit geschaffen wird, auch sehr lange und schwere Wurstwaren an dem am Wurstende zusammengebundenen Ende der Verstärkungshülle aufhängen zu können. Des Weiteren ist es aus der Schrift bekannt, die diagonalen Gitterstäbchen so auszubilden, dass sie an ihren Enden jeweils in ein sich in Längsrichtung der Wurstware erstreckendes Gitterstäbchen auslaufen, in welchem die Fäden der diagonalen Gitterstäbchen miteinander verflochten sind, so dass die in Längsrichtung verlaufenden Gitterstäbchen die doppelte Stärke als die diagonalen Gitterstäbchen aufweisen. Eine besonders kräftige Verstärkungshülle wird dadurch geschaffen, dass die Gitterstäbchen im Wesentlichen rechtwinklig zueinander verlaufen und sich in Längs- und Querrichtung der Wurst erstrecken, derart, dass die sich in Längsrichtung erstreckenden Gitterstäbchen miteinander verflochtene Fäden aufweisen. Hierdurch ist eine außerordentlich widerstandsfähige Verstärkungshülle gegeben und die Möglichkeit geschaffen, die Würste beispielsweise beim Verladen auf Schiffe oder Eisenbahnfahrzeuge besonders hoch stapeln zu können. Die zum Einsatz kommenden Fäden sind unelastische Fäden.

Aus der DE 91 07 065 U1 ist ebenfalls eine Verstärkungshülle als Wursthülle bekannt, bei der der Hüllkörper in Schlauchlängsrichtung zumindest einmal geteilt ist und der Hüllkörper entlang seiner im Teilungsbereich liegenden Längsbereiche durch einen Faden verbunden ist, der im Wesentlichen derart ohne Einbindung durch den Hüllkörper geführt ist, dass er in Längsrichtung herausziehbar ist. Im Übrigen dient die angegebene Verstärkungshülle zum bereits beschriebenen gleichen Zweck.

Eine Verstärkungshülle in Form eines Wurstnetzes ist auch aus der DE 29 12 961 C2 und der DE 29 25 600 C2 bekannt. Die Verstärkungshülle besteht aus einem Schlauchnetz aus geklöppelten oder geraschelten Maschen mit mindestens zwei Schenkeln aus jeweils mindestens einem Faden aus textilem Material. In der erstgenannten Schrift ist in jedem Schenkel der Masche, zusammen mit den Textilfäden, mindestens ein Faden aus elastomerem Material vorgesehen. In der zweitgenannten Schrift ist nur in einem Schenkel jeder Masche, in mindestens einer senkrechten und/oder querverlaufenden Maschenreihe, mindestens ein Faden aus elastomerem Material eingebracht. Die Fäden aus elastomerem Material bewirken, dass auch beim Schrumpfprozess bzw. nach dem Schrumpfprozess der gefüllten Wurst die Versteifungshülle an der Wursthülle anliegt. Die eingebrachte unelastische Faser bewirkt, dass beim Füllen des Wurstdarmes bzw. der Wursthülle die Verstärkungshülle sich nicht mitdehnt, so dass sich im Maschenbereich der Verstärkungshülle Wülste bilden können, die aus der Ebene des Geflechts hervortreten und die voneinander durch rillenförmige Vertiefungen getrennt sind, in denen die Maschenschenkel liegen. Je nach Ausbildung der Maschen bzw. der durch das Netzwerk begrenzten Felder sind verschiedene optische Effekte durch die Wurstwülste gegeben.

Eine elastische Verstärkung für Würste und Fleischwaren mit netzartiger Struktur ist ferner aus der DE 1 951 900 U1 bekannt. Diese besteht aus einem schlauchförmigen Maschennetz aus textilen Einzelfäden oder Garnen und wird über die Wurst- oder Fleischware gezogen. Die Maschen des Netzes weisen eine rhombische Form auf, vorzugsweise verlaufen die maschenbildenden Schenkel zur Schlauchachse diagonal. Die Maschenschenkel sind aus hochgezwirnten, gekräuselten, vollsynthetischen Fäden gebildet.

Ein elastisches schlauchförmiges Netz zum Binden von Wurstwaren oder dergleichen ist ferner aus der AT 300 534 C bekannt.

Allen bekannten Verstärkungshüllen haftet der Nachteil an, dass sie nur für Wurstwaren und Fleischwaren im Allgemeinen verwendet werden können, die eine gestreckte, nahezu geradlinige befüllbare Form aufweisen. Die bekannten Verstärkungshüllen können deshalb nicht für Wurst- und Fleischwaren verwendet werden, die eine gebogene Form aufweisen oder aufweisen sollen. Dauerwurstwaren, verfüllt in darmartigen Natur- oder Kunsthüllen, können aber auch gebogene Formen aufweisen. Des Weiteren sind Umhüllungen vielfach gewünscht, die eine Bogenform, einer Naturform nachempfunden, aufweisen.

Der Erfindung liegt die Aufgabe zugrunde, eine Verstärkungshülle anzugeben, die zur Prägung der Form gebogener Wurst- und Fleischwaren verwendet und einfach und preiswert auch maschinell hergestellt werden kann.

Die Aufgabe löst die Erfindung durch Ausgestaltung der Verstärkungshülle gemäß der im Anspruch 1 angegebenen technischen Lehre, wonach das Netzgeflecht in Längsrichtung gebogen oder wellenförmig, aus aneinandergefügten Bogenteilen bestehend, in zwei oder drei Achsenebenen verlaufend ausgeführt ist. Es wird also nicht unter Ausnutzung eventueller Elastizitätsunterschiede des Geflechts eine Bogenform erreicht, sondern durch Vorgaben bei der Fertigung des Netzgeflechtes dieses in Längsrichtung so gebogen ausgeführt, dass die Bogenform der Wurst- oder Fleischware durch das Netzgeflecht selbst bestimmt ist. Die Verstärkungshülle kann darüber hinaus aus verschiedenen Bogenteilen, die zusammenhängend gefertigt sind, bestehen, so dass eine wellenförmige Struktur gegeben ist. Diese wellenförmige Struktur kann in zwei oder aber auch in drei Achsenebenen verlaufen, wobei die Ausführung in drei Achsenebenen bedeutet, dass die Verstärkungshülle schraubenzieherförmig ausgeführt ist. Auch ist ersichtlich, dass eine kreisrunde Form durch entsprechende Fertigung des Netzes realisierbar ist. Es ist ferner ersichtlich, dass selbst bei einer unelastischen Hülle des Füllkörpers eine Formgebung zwangsweise durch die festgelegte Geometrie der Verstärkungshülle erfolgt. Wenn darüber hinaus die Hülle des Füllkörpers aus dehnbarem Material besteht, ist ersichtlich, dass über die Netzstruktur Wülste bei dem Füllprozess unter Druck hergestellt werden können, die optisch hervortreten, wobei diese durch die durch Längs- und Querfäden bzw. Maschenstege begrenzten Felder charakterisiert sind. Zu diesem Zweck eignet sich insbesondere die Verwendung einer Fadenkombination aus einem unelastischen und einem elastischen Faden, so dass auch nach dem Schrumpfprozess der Ware das Netz an der Hülle des Füllkörpers weiterhin anliegt, beispielsweise auch in den die Felder begrenzenden Rillen, die beim Füllprozess automatisch entstehen. Wenn darüber hinaus die in Längsrichtung vorgesehenen Fäden zusätzlich im Längsdrall verlaufen, so kann neben einer gebogenen, wellenförmigen oder schraubenzieherförmigen Verlegung ein weiterer zusätzlicher optischer Dralleffekt an der Oberfläche erzielt werden. Dabei können bei entsprechender Materialwahl der Hülle des Füllkörpers Wülste hervortreten, die in einem Drall über die Oberfläche des Bogenstückes verlaufen.

Bei der Herstellung einer Verstärkungshülle nach der Erfindung kommt es darauf an, die Fäden mit abgestimmten und in Abhängigkeit von ihrer Platzierung und ihrem Verlauf abhängigen Geschwindigkeiten durchzuziehen bzw. vom Knoten- oder Anbindungspunkt zum nächsten Knoten- bzw. Anbindungspunkt zu führen, um in gewünschter Weise erhöhte oder verkürzte Längenabschnitte zum nächsten Knotenpunkt zu erreichen. Diese gesteuerte Zuführung bzw. durch das gesteuerte Durchziehen mit unterschiedlichen Geschwindigkeiten wird entweder durch Antriebsteuerung oder durch Verwendung von besonderen Transportrollenbahnen für die einzelnen Fäden bewirkt, die jeweils mit gleichen oder gesteuert geänderten Umdrehungszahlen laufen oder unterschiedliche Durchmesser aufweisen. Wenn darüber hinaus Einzelsteuerungen mittels Elektromotoren möglich sind, können die Durchlaufgeschwindigkeiten auch musterabhängig vom Geflecht derart gesteuert werden, dass gewünschte Feldzuschnitte bzw. Maschen des Geflechtes gegeben sind, beispielsweise rechteckförmige, quadratische, rautenförmige, ovale oder auch runde Felder, die besondere optische Effekte bewirken. Die Maschenstege können verstärkt werden, indem die Maschengröße bzw. die Feldgröße der zwischen den Stäbchen liegenden Felder so groß gewählt wird, dass die Wurstware wulstförmig mit ihrer Hülle hervortreten kann.

Vorteilhafte Weiterbildungen der Erfindung sind in den Unteransprüchen im Einzelnen angegeben.

Grundsätzlich lässt die Erfindung die Fertigung von Netzgeflechten beispielsweise auf Klöppelmaschinen zu, die sowohl in der einen Richtung als auch in der anderen Richtung Bogenform aufweisen, beispielsweise S-förmig verlaufende Bogenformen, die sich aneinander schließen. Sogar runde Formen lassen sich realisieren. Des Weiteren lässt die Fertigung auf derartigen Klöppelmaschinen auch die Fertigung von unterschiedlichen Durchmessergrößen und die Festlegung der Länge der Querfäden zu. Auch können abschnittsweise die in Längsrichtung gegebenen Auslaufenden im Durchmesser durch die Querfäden verkleinert werden, um eine bessere Formanpassung im Auslaufbereich einer darmartigen Hülle einer Wurstware beispielsweise zu ermöglichen. Eine besonders kontinuierliche Fertigung wird ermöglicht, wenn die in Längsrichtung verlaufenden Fäden um einen fiktiven Mittelpunkt herum kreisbogenförmig angeordnet sind, derart, dass der oder die innenseitig verlaufenden Fäden kürzer sind als die auf den äußeren Bahnen kreisbogenförmig verlaufenden Fäden. Die Längsfäden werden durch die in Querrichtung verlaufenden angebundenen Fäden, die gleich nach dem Überziehen auf einen Füllkörper diesen bogenförmig prägen oder annähernd gleiche Umfangslängen aufweisen, miteinander verbunden.

Beispielsweise lassen sie sich netzartig miteinander verbinden. Anbindungen in einer Klöppelmaschine lassen sich realisieren, wobei die in Querrichtung verlaufenden Fäden Bogensegmente zwischen den Längsfäden bilden, die von der Länge der nächstfolgenden Längsfäden und von dem Bogenwinkel und dem jeweiligen effektiven Radius, der sich aus der Lage des Längsfadens auf dem Umfang der Querfäden ergibt, bestimmt sind. Die tatsächliche Länge wird durch die endseitigen Überlängen des Bogenwinkelmaßes, das über die Füllhülle hinausgeht, bestimmt. Das Bogenwinkelmaß kann beispielsweise 30° oder 40° betragen. Die Größe des Radius R1 bestimmt also auch die effektiven Radien der weiteren Längsfäden mit, die im Rahmen des Bogenmaßes aneinandergebunden sind und das Netz bilden. Bei Anbringung von Längsfäden und Querfäden kann dabei sowohl eine trapezförmige, aber auch eine rautenförmige Gitterfelderstruktur erzeugt werden. Ebenso können für die Längsfäden verstärkte Garne verwendet werden.

Die vorteilhaften Ausgestaltungsformen der erfindungsgemäß ausgebildeten Verstärkungshülle sind in den Unteransprüchen im Einzelnen detailliert angegeben.

Die Herstellung kann aber auch auf Raschelmaschinen oder auf anderen Wirkmaschinen erfolgen, die in geeigneter Weise eine Steuerung der Durchlaufgeschwindigkeiten der einzelnen Fäden ermöglichen.

Üblicherweise werden unelastische Fäden und Garne für die Herstellung des Netzes verwendet. Es können aber auch Fäden und Garne mit eingeschränkter Elastizität verwendet werden, die beispielsweise eine Dehnung um ein bestimmtes Maß zulassen, darüber hinaus sich aber starr verhalten, so dass beim Aufziehen einer solchen Verstärkungshülle auf die Befüllungshülle einer Wurstware die Toleranzen ausgeglichen werden können. Die Dehnbarkeit sollte dabei im Millimeterbereich liegen. Die Längsfäden und/oder die Fäden in Querrichtung können Garne sein, die Schrumpffasern enthalten. Solche Garne sind bekannt. Die Schrumpffasern weisen die Eigenschaft auf, dass sie durch UV-Strahlung, Wärme, Kühlung oder durch längere Lagerzeiten um ein bestimmtes Maß schrumpfen. Die Verwendung solcher Garne hat den Vorteil, dass dann, wenn der Füllkörper, z.B. eine Hartwurstware, durch längere Trocknung schrumpft, das Netz angepasst wird oder sich automatisch dem kleineren Durchmesser anpasst. Solche Garne können beispielsweise Bikomponenten-Fasern enthalten, deren Einzelfilamente sich aus mindestens zwei unterschiedlichen Teilfilamenten zusammensetzen, die wiederum aus zwei unterschiedlichen Polyestern/Polymeren bestehen.

Die Überlänge, die über den Bogen hinausgeht, ist besonders geeignet, um durch Verknotung eine sichere Verstärkung auch in Längsrichtung der Wurstware oder Fleischware zu ermöglichen. In einfachster Ausführungsform können beispielsweise auf einem Durchmesser von etwa 7 cm bis 8 cm der Wurstware drei Längsfäden um 120° verteilt angeordnet sein, die mit den Querfäden verbunden sind. Auch ist es möglich, nur einen innereh und einen äußeren Längsfaden vorzusehen. Üblicherweise werden aber vier Längsfäden und eine bestimmte Anzahl von Querfäden zur Herstellung des Netzes verwendet, um definierte rauten- oder trapezförmige Feldgrößen zu erreichen. Auch können mindestens zwei Längsfäden in geringen Abstand zueinander parallel angeordnet sein, wobei derartige parallele Anordnungen verteilt auf der Umfangsbahn um den Füllkörper vorgesehen sein können. Hierdurch wird primär der optische Eindruck verändert, zugleich aber auch die Andruckfläche erhöht. Auch bei diesen parallelen Anordnungen müssen unterschiedliche Durchlaufgeschwindigkeiten bzw. Auszugsgeschwindigkeiten der Längsfäden beachtet werden.

Anstelle von Querfäden können auch rautenförmige andere Netzwerke mit rhombischen Formen zwischen den Längsfäden gewirkt oder geklöppelt sein. Die Herstellung der Krümmung erfolgt in einfachster Weise durch Zuführung der Längsführungen in der Wirk- oder Klöppelmaschine mit unterschiedlichen Geschwindigkeiten. Die Zuführung des Garnes oder der Fäden an der innenliegenden Seite erfolgt gegenüber den nächstfolgenden langsamer. Der nächstfolgende Längsfaden wird also schneller in die Maschine eingezogen. Diese stoppt nach jedem Rastermaß den Durchlauf und stellt die Verbindung zwischen den Querfäden und den Längsfäden am Knotenpunkt her. Der vierte Längsfaden muss noch schneller eingezogen werden, da er noch weiter entfernt ist, um die gewünschte Längenerstreckung zu erreichen, damit die Bogenform sichergestellt ist.

Anstelle der angegebenen Wurst- und Fleischwaren können selbstverständlich auch andere Füllkörper, z. B. auch in Form eines Luftballons, von einer Verstärkungshülle umgeben sein. Die erstellte Netzstruktur kann also auf alle gebogenen Waren und Hüllen angepasst zur Anwendung kommen. Ebenso kann anstelle der angegebenen Teilung eine Zwei-, Drei- oder Vierteilung oder auch eine Fünf-, Sechs-, Sieben- oder Achtteilung der Umfangsbahn der querverlaufenden Fäden erfolgen oder auch die Einbringung einer anderen kleineren Netzstruktur zwischen den Längsfäden. Es versteht sich dabei von selbst, dass entsprechend diesen Ausgestaltungsformen und -größen die Zuführgeschwindigkeiten der Längsfäden so gesteuert sein müssen, dass die gewünschte bogenförmige Ausprägung sichergestellt ist.

Die Erfindung wird nachfolgend anhand der in den Zeichnungen dargestellten Ausführungsbeispiele ergänzend erläutert.

In den Zeichnungen zeigen:
- FIG 1: eine gebogene Wurstware mit einer Verstärkungshülle nach der Erfindung,
- FIG 2: ein Beispiel einer wellenförmigen Ausprägung einer Wurst mit erfindungsgemäßer Verstärkungshülle,
- FIG 3: eine schraubenzieherähnliche Form der Wurst mit einer erfindungsgemäßen Verstärkungshülle,
- FIG 4: ein Beispiel unter Einbindung eines elastischen Fadens in einem Garn mit unelastischen Fäden und
- FIG 5: ein Beispiel eines unterschiedlichen Musters des Geflechts.

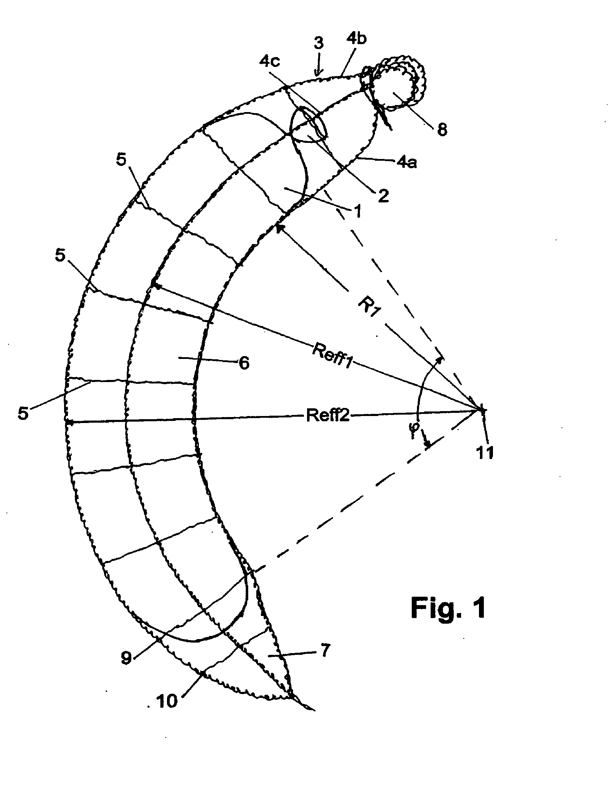

In Figur 1 ist eine Wurst, z. B. eine Dauerwurst, abgebildet, die in einer Hülle 1 abgefüllt ist. Die Hülle 1 kann beispielsweise eine vorgefertigte textile Hülle oder auch ein Naturdarm sein. Sie ist kopfseitig abgebunden. Durch das Abbinden entsteht ein Zipfel 2. Die dargestellte Wurst ist umgeben von einer erfindungsgemäß hergestellten gebogenen Verstärkungshülle 3 in Form eines gitterartigen Netzgeflechtes. Dieses Netzgeflecht weist Längsfäden 4a, 4b und 4c auf. Es handelt sich dabei um vier Längsfäden, die um den Umfang der Verstärkungshülle jeweils um 90° versetzt angeordnet sind, wobei ein Längsfaden nicht sichtbar ist. Die Längsfäden bestehen aus Garnen, die auch verstärkt sein können. Die Längsfäden 4a, 4b und 4c (der hintere Längsfaden ist nicht zu sehen) sind durch Querfäden 5 miteinander verbunden. Die Querfäden 5 sind jeweils umlaufend angeordnet und bilden zusammen jeweils mit den benachbarten Längsfäden 4a, 4b, 4c trapezförmige Felder 6, die einen Teilabschnitt der Wursthülle 1 verstärken. Die Länge der Verstärkungshülle 3 wird bestimmt durch den Bogenwinkel sowie durch die untenseitige Überlänge 7 und die obenseitige, am Ende verknotete Überlänge 8.

Um die gebogene Form auf einer Wirk- oder Klöppelmaschine zu erhalten, werden die in die Maschine eingezogenen Längsfäden 4a, 4b, 4c mit unterschiedlichen Geschwindigkeiten eingezogen. Der innenliegende Längsfaden 4a, der in einem Bogen mit dem fiktiven Radius R1 verläuft, wird relativ langsam in die Maschine eingezogen, während der mittlere Längsfaden 4c mit dem effektiven Radius R_{eff1} schneller eingezogen wird, damit die gewünschten Trapezfelder entstehen können und die Bogenform gewahrt ist. Noch schneller wird der äußere Längsfaden 4b eingezogen, um diesen in dem fiktiven Radius R_{eff2} mit den Querfäden 5 verbinden zu können. Während des Verbindens stoppt der Durchlauf kurzzeitig und zieht dann mit den unterschiedlichen Geschwindigkeiten die Längsfäden 4a, 4b, 4c zur Anbindung an die Querfäden 5 durch. Dadurch entsteht in gewünschter Weise das Netz, wie es dargestellt ist. Natürlich kann auch auf die Überlängen 7 und 8 gänzlich verzichtet werden oder es können die Querfäden 9 und 10 in den Überlängen 7 und 8 verkürzt ausgeführt werden. Ebenso können auch die Querfäden verstärkte Garne sein. Dies hängt jeweils vom Einsatz ab.

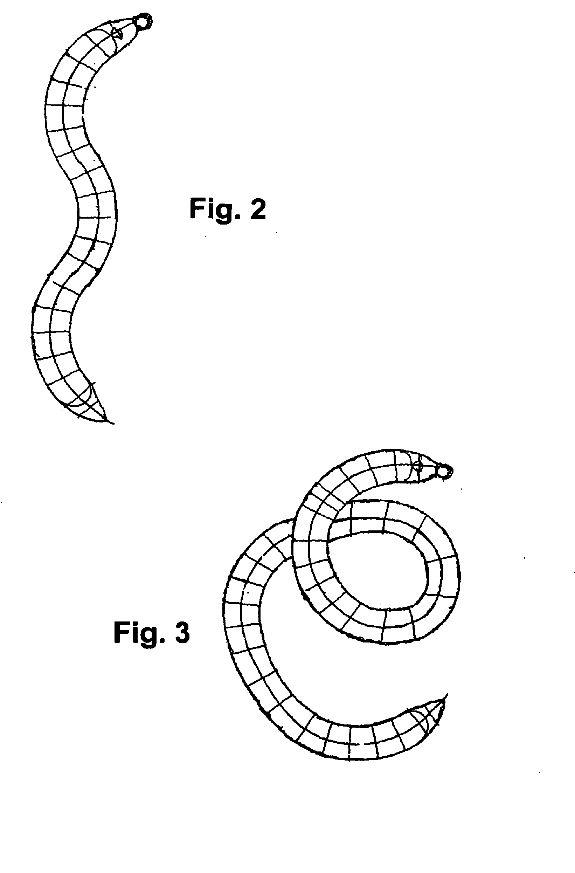

In Figur 2 ist eine Wellenform einer Verstärkungshülle dargestellt. Diese prägt beim Befüllen der Hülle des Füllkörpers die Form der Wurstware in zwei Ebenen.

Figur 3 zeigt ein Beispiel in drei Achsenebenen, aus welchem ersichtlich ist, dass durch Aneinanderfügen bzw. durch eine Endlos-Herstellung eine Verstärkungshülle in schraubenförmigen Strukturen hergestellt werden kann, die die Wurstform beim Befüllen der Hülle des Füllkörpers prägt.

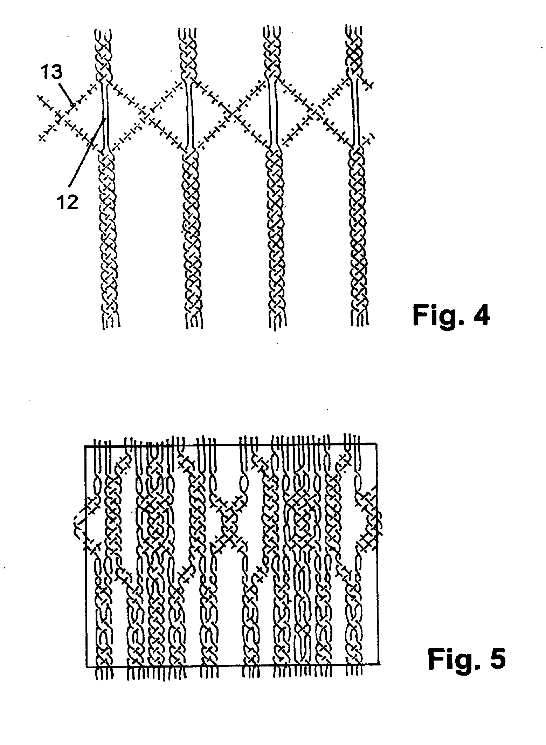

Figur 4 gibt eine Netzstruktur an, bei der die Längsfäden 12 einerseits mit elastischen Fäden 13 umgeben und andererseits die elastischen Fäden 13 als Querfäden eingewirkt sind, so dass in beiden Richtungen ein Zusammenziehen gewährleistet ist, wenn die Wurstware durch Trocknung schwindet. Dabei können Längsfäden mit eingewirkt oder durchlaufend vorgesehen sein. Es können darüber hinaus jeweils eine Ummantelung sicherstellende Querfäden elastisch ausgeführt oder zusätzlich unelastische vorgesehen sein, um nach dem Schrumpfprozess ein Anliegen des Netzes an der Hülle zu bewirken. Dem Fachmann eröffnen sich diverse Möglichkeiten, die z.B. in der DE 29 25 600 C2 und in der DE 29 12 961 C2 angegeben sind.

Figur 5 zeigt ein anderes Muster eines Rundgewirkes nach der Erfindung, das durch höhere Flächendeckung charakterisiert ist.

### Bezugszeichenliste

- 1: Hülle
- 2: Zipfel
- 3: Verstärkungshülle (Netzgeflecht)
- 4a: Längsfaden
- 4b: Längsfaden
- 4c: Längsfaden
- 5: Querfaden
- 6: trapezförmige Felder
- 7: Überlänge
- 8: Überlänge
- 9: Querfaden
- 10: Querfaden
- 11: Mittelpunkt
- 12: unelastische Fäden
- 13: elastische Fäden

## Patentansprüche

1. Verstärkungshülle als maschinell gefertigtes, schlauchförmiges, gitterartiges Netzgeflecht, dessen aus mindestens zwei Fäden gebildete Gitterstäbchen an den Kreuzungsstellen miteinander verbunden sind, wobei die Gitterstäbchen sich in Längs- und Querrichtung zum eingeführten runden und gestreckten Füllkörper erstrecken, **dadurch gekennzeichnet, dass** das Netzgeflecht (3) in Längsrichtung gebogen oder wellenförmig, aus aneinandergefügten Bogenteilen bestehend, in zwei oder drei Achsenebenen verlaufend ausgeführt ist.

2. Verstärkungshülle nach Anspruch 1, **dadurch gekennzeichnet, dass** die in Längsrichtung vorgesetzten Fäden (4a, 4b, 4c) zusätzlich im Längsdrall verlaufen.

3. Verstärkungshülle nach Anspruch 1, **dadurch gekennzeichnet, dass** die in Längsrichtung verlaufenden Fäden (4a, 4b, 4c) je Bogen oder Bogenteil um einen fiktiven Mittelpunkt (11) herum kreisbogenförmig, entsprechend dem gewünschten Bogen oder Bogenteil angeordnet sind, derart, dass der oder die innenseitig verlaufenden Fäden (4a) kürzer sind als die auf den äußeren Bahnen kreisbogenförmig verlaufenden Fäden (4b, 4c).

4. Verstärkungshülle nach Anspruch 3, **dadurch gekennzeichnet, dass** der innenseitige Längsfaden (4a) eine Länge aufweist, die vom Bogenwinkel (ϕ) eines Kreises mit einem fiktiven Radius (R1) mitbestimmt ist, und dass die Länge der nächstfolgenden Längsfäden (4c, 4b) von dem Bogenwinkel (ϕ) und jeweils einem effektiven Radius (R_{eff}1 und R_{eff}2) bestimmt ist, der sich aus der Lage des Längsfadens (4a, 4b, 4c) auf dem Umfang der Querfäden (5, 9, 10) ergibt, wobei die tatsächliche Länge durch die seitliche Überlänge (7, 8) des Winkelmaßes des Bogens bestimmt ist.

5. Verstärkungshülle nach Anspruch 1 oder 4, **dadurch gekennzeichnet, dass** die in Querrichtung angebundenen Ummantelungs-Fäden (5), die den Füllkörper (1) bzw. die Hülle des Füllkörpers (1) umlaufen, mit gleichgroßen oder angenähert gleichgroßen Umfangslängen vorgesehen sind, die an den Längsfäden (4a, 4b, 4c) angebunden sind und Bogensegmente zwischen den Längsfäden bilden.

6. Verstärkungshülle nach Anspruch 1, **dadurch gekennzeichnet, dass** die Felder (6) des gitterartigen Netzgeflechtes Trapezform aufweisen und an der Innenseite des jeweiligen Längsfadens (4a, 4b, 4c) der Abstand geringer ist als der an der Außenseite.

7. Verstärkungshülle nach Anspruch 1, **dadurch gekennzeichnet, dass** die Fäden (4a, 4b, 4c) und die Ummantelungsfäden (5, 9, 10), Garne sind.

8. Verstärkungshülle nach Anspruch 7, **dadurch gekennzeichnet, dass** mindestens die Längsfäden (4a, 4b, 4c) der sich in Längsrichtung erstreckenden Gitterstäbchen und die Ummantelungsfäden (5) miteinander verflochten sind.

9. Verstärkungshülle nach Anspruch 1, **dadurch gekennzeichnet, dass** die Querfäden (9, 10) in den Endbereichen des Füllkörpers (1) verkürzt und in ihrer Länge dem Durchmesser des Füllkörpers (1) angepasst sind.

10. Verstärkungshülle nach Anspruch 1, **dadurch gekennzeichnet, dass** jede Verstärkungshülle (3) seitlich überstehende Fadenenden (8) zum Verknoten aufweist.

11. Verstärkungshülle nach Anspruch 1, **dadurch gekennzeichnet, dass** die Fäden (4a, 4b, 4c, 5, 9, 10) elastisch und/oder unelastisch sind oder mindestens die Ummantelungsfäden eine unelastische Faser oder Garn aufweisen, die mit einer elastischen Faser oder einem solchen Garn kombiniert ist.

12. Verstärkungshülle nach Anspruch 1, **dadurch gekennzeichnet, dass** der Füllkörper (1) eine flexible oder unflexible Hülle, gefüllt mit einer Wurstware, insbesondere Dauerwurstware, ist.

13. Verstärkungshülle nach Anspruch 1, **dadurch gekennzeichnet, dass** das Netzgeflecht (3) zwei, drei, vier, fünf, sechs, sieben oder acht Teilungen auf der Umfangsbahn um den Füllkörper (1) aufweist und an den Teilungspunkten die Längsfäden (4a, 4b, 4c) angebunden sind.

14. Verstärkungshülle nach Anspruch 12, **dadurch gekennzeichnet, dass** mindestens zwei Längsfäden (4a, 4b, 4c) in geringem Abstand zueinander parallel angeordnet sind und einen Längsfaden bilden und dass derartige parallele Anordnungen verteilt auf der Umfangsbahn um den Füllkörper vorgesehen sind.

15. Verstärkungshülle nach Anspruch 1 oder 11, **dadurch gekennzeichnet, dass** die Längsfäden (4a, 4b, 4c) und/oder die Fäden in Querrichtung (5) Garne sind, die Schrumpffasern aufweisen, wobei die Schrumpffaser durch UV-Strahlung, Wärme, Kühlung oder durch längere Lagerung um ein bestimmtes Maß schrumpft.

16. Verstärkungshülle nach Anspruch 15, **dadurch gekennzeichnet, dass** die Garne Bikomponenten-Fasern enthalten, deren Einzelfilamente sich aus mindestens zwei unterschiedlichen Teilfilamenten zusammensetzen, die wiederum aus zwei unterschiedlichen Polyestern/Polymeren bestehen.

17. Verstärkungshülle nach Anspruch 1, **dadurch gekennzeichnet, dass** zwischen den Längsfäden (4a, 4b, 4c) oder unter Einschluss derselben die Querfäden derart verarbeitet sind, dass sechseckförmige, rautenförmige, dreieckige, quadratische oder ovale Netzfelder gegeben sind.

18. Verstärkungshülle nach einem der vorhergehenden Ansprüche, **dadurch gekennzeichnet, dass** das Netzgeflecht auf einer Wirk-, Raschel- oder einer Klöppelmaschine hergestellt ist, wobei gesteuerte, voneinander abweichende Vorschubgeschwindigkeiten der Längsfäden (4a, 4b, 4c) zu unterschiedlichen Längenausbildungen der Längsfäden (4a, 4b, 4c) führen und durch sich ändernde Zuführungsgeschwindigkeiten der Querfäden (5) die Musterbildung des Geflechts unter Berücksichtigung der gebogenen oder wellenförmigen Längserstreckung des Geflechts erfolgt.

## Claims

1. Reinforcing casing as mechanically produced hose-shaped, meshlike netting, the mesh bars - which are formed from at least two threads - of which are connected together at the crossing points, wherein the mesh bars extend in longitudinal and transverse direction with respect to the inserted round and stretched filling body, **characterised in that** the netting (3) curved or wave-shaped in longitudinal direction and consisting of mutually adjoining curved parts is constructed to extend in two or three axial planes.

2. Reinforcing casing according to claim 1, **characterised in that** the threads (4a, 4b, 4c) at the front in longitudinal direction additionally extend with longitudinal twist.

3. Reinforcing casing according to claim 1, **characterised in that** the threads (4a, 4b, 4c) extending in longitudinal direction are arranged per curve or curved part arcuately about a notional centre point (11) in correspondence with the desired curve or curved part in such a manner that the or each thread (4a) extending at the inner side is shorter than the threads (4b, 4c) arcuately extending on the outer paths.

4. Reinforcing casing according to claim 3, **characterised in that** the longitudinal thread (4a) at the inner side has a length determined by the curve angle (ϕ) of a circle with a notional radius (R1) and that the length of the succeeding longitudinal threads (4c, 4b) is determined by the curve angle (ϕ) and a respective effective radius (R_{eff1} and R_{eff2}) which results from the position of the longitudinal thread (4a, 4b, 4c) on the circumference of the transverse threads (5, 9, 10), wherein the actual length is determined by the lateral excess length (7, 8) of the angle size of the curve.

5. Reinforcing casing according to claim 1 or 4, **characterised in that** the encasing threads (5), which are tied in transverse direction and which encircle the filling body (1) or the casing of the filling body (1), are provided with equal or approximately equal circumferential lengths, which are tied to the longitudinal threads (4a, 4b, 4c) and form curve segments between the longitudinal threads.

6. Reinforcing casing according to claim 1, **characterised in that** the fields (6) of the meshlike netting have a trapezium shape and the spacing is smaller at the inner side of the respective longitudinal thread (4a, 4b, 4c) than that at the outer side.

7. Reinforcing casing according to claim 1, **characterised in that** the threads (4a, 4b, 4c) and the encasing threads (5, 9, 10) are yarns.

8. Reinforcing casing according to claim 7, **characterised in that** at least the longitudinal threads (4a, 4b, 4c) of the mesh bars extending in longitudinal direction and the encasing threads (5) are braided together.

9. Reinforcing casing according to claim 1, **characterised in that** the transverse threads (9, 10) are shortened in the end regions of the filling body (1) and are adapted in the length thereof to the diameter of the filling body (1).

10. Reinforcing casing according to claim 1, **characterised in that** each reinforcing casing (3) has laterally protruding thread ends (8) for knotting.

11. Reinforcing casing according to claim 1, **characterised in that** the threads (4a, 4b, 4c, 5, 9, 10) are elastic and/or non-elastic or at least the encasing threads have a non-elastic fibre or yam which is combined with an elastic fibre or such a yarn.

12. Reinforcing casing according to claim 1, **characterised in that** the filling body (1) is a flexible or non-flexible casing filled with a sausage product, particularly a preserved sausage product.

13. Reinforcing casing according to claim 1, **characterised in that** the netting (3) has two, three, four, five, six, seven or eight divisions on the circumferential path around the filling body (1) and the longitudinal threads (4a, 4b, 4c) are tied at the division points.

14. Reinforcing casing according to claim 12, **characterised in that** at least two longitudinal threads (4a, 4b, 4c) are arranged in parallel at a small spacing from one another and form a longitudinal thread and that parallel arrangements of that kind are provided to be distributed on the circumferential path around the filling body.

15. Reinforcing casing according to claim 1 or 11, **characterised in that** the longitudinal threads (4a, 4b, 4c) and/or the threads in transverse direction (5) are yarns which comprise shrink fibres, wherein the shrink fibres are shrunk by a defined amount through ultraviolet radiation, heat, cooling or by longer storage.

16. Reinforcing casing according to claim 15, **characterised in that** the yarns contain bicomponent fibres, the individual filaments of which are composed of at least two different part filaments which in turn consist of two different polyesters/polymers.

17. Reinforcing casing according to claim 1, **characterised in that** between the longitudinal threads (4a, 4b, 4c) or with inclusion of the same the transverse fibres are processed in such a manner that hexagonal, lozenge-shaped, triangular, square or oval net fields are given.

18. Reinforcing casing according to one of the preceding claims, **characterised in that** the netting is produced on a knitting machine, double-rib loom or bobbin lace machine, wherein controlled mutually differing speeds of advance of the longitudinal threads (4a, 4b, 4c) lead to different length formations of the longitudinal threads (4a, 4b, 4c) and the pattern formation of the netting is carried out by changing feed speeds of the transverse threads (5) with consideration of the curved or wave-shaped length of the netting.

## Revendications

1. Enveloppe de renforcement sous forme de tissu fileté de type treillage, tubulaire, fabriqué mécaniquement, dont les petites barres diagonales formées d'au moins deux fibres sont reliées entre elles aux points d'intersection, les petites barres diagonales s'étendant dans le sens longitudinal et transversal par rapport au corps de remplissage introduit, allongé et rond, **caractérisée en ce que** le tissu fileté (3) est réalisé arqué ou ondulé dans le sens longitudinal, se composant de parties arquées jointes, s'étendant dans deux ou trois plans d'axe.

2. Enveloppe de renforcement selon la revendication 1, **caractérisée en ce que** les fibres (4a, 4b, 4c) placées en amont dans le sens longitudinal s'étendent en outre en torsion longitudinale.

3. Enveloppe de renforcement selon la revendication 1, **caractérisée en ce que** les fibres (4a, 4b, 4c) s'étendant dans le sens longitudinal sont disposées par arc ou partie arquée en arc de cercle autour d'un point central (11) fictif selon l'arc ou la partie arquée souhaitée de telle sorte que la ou les fibres (4a) s'étendant côté intérieur soient plus courtes que les fibres (4b, 4c) s'étendant en arc de cercle sur les trajectoires extérieures.

4. Enveloppe de renforcement selon la revendication 3, **caractérisée en ce que** la fibre longitudinale (4a) côté intérieur présente une longueur qui est déterminée par l'angle d'arc (ϕ) d'un cercle avec un rayon (R1) fictif et **en ce que** la longueur des fibres longitudinales (4c, 4b) suivantes est déterminée par l'angle d'arc (ϕ) et respectivement un rayon (R_{eff}1 et R_{eff}2) effectif qui ressort de la position de la fibre longitudinale (4a, 4b, 4c) sur la périphérie des fibres transversales (5, 9, 10), la longueur réelle étant déterminée par la surlongueur (7, 8) latérale de la mesure angulaire de l'arc.

5. Enveloppe de renforcement selon la revendication 1 ou 4, **caractérisée en ce que** les fibres d'enveloppe (5) nouées dans le sens transversal qui entourent le corps de remplissage (1) ou l'enveloppe du corps de remplissage (1), sont prévues avec des longueurs périphériques de même grandeur ou de grandeur approximativement identique, qui sont reliées aux fibres longitudinales (4a, 4b, 4c) et forment des segments d'arc entre les fibres longitudinales.

6. Enveloppe de renforcement selon la revendication 1, **caractérisée en ce que** les champs (6) du tissu fileté de type treillis présentent une forme trapézoïdale et sur le côté intérieur de la fibre longitudinale (4a, 4b, 4c) respective, la distance est plus petite que celle sur le côté extérieur.

7. Enveloppe de renforcement selon la revendication 1, **caractérisée en ce que** les fibres (4a, 4b, 4c) et les fibres d'enveloppe (5, 9,10) sont des fils.

8. Enveloppe de renforcement selon la revendication 7, **caractérisée en ce qu'**au moins les fibres longitudinales (4a, 4b, 4c) des petites barres diagonales s'étendant dans le sens longitudinal et les fibres d'enveloppe (5) sont entrecroisées entre elles.

9. Enveloppe de renforcement selon la revendication 1, **caractérisée en ce que** les fibres transversales (9, 10) sont raccourcies dans les zones d'extrémité du corps de remplissage (1) et sont adaptées dans leur longueur au diamètre du corps de remplissage (1).

10. Enveloppe de renforcement selon la revendication 1, **caractérisée en ce que** chaque enveloppe de renforcement (3) présente des extrémités de fibre (8) faisant saillie latéralement pour le nouage.

11. Enveloppe de renforcement selon la revendication 1, **caractérisée en ce que** les fibres (4a, 4b, 4c, 5, 9, 10) sont élastiques et/ou non élastiques ou au moins les fibres d'enveloppe présentent un fil ou brin non élastique qui est combiné à un filament élastique ou à un tel brin.

12. Enveloppe de renforcement selon la revendication 1, **caractérisée en ce que** le corps de remplissage (1) est une enveloppe flexible ou non-flexible remplie d'un produit de charcuterie, en particulier d'un produit de charcuterie à longue conservation.

13. Enveloppe de renforcement selon la revendication 1, **caractérisée en ce que** le tissu fileté (3) présente deux, trois, quatre, cinq, six, sept ou huit séparations sur la trajectoire périphérique autour du corps de remplissage (1) et les fibres longitudinales (4a, 4b, 4c) sont nouées aux points de séparation.

14. Enveloppe de renforcement selon la revendication 12, **caractérisée en ce qu'**au moins deux fibres longitudinales (4a, 4b, 4c) sont disposées parallèlement à faible distance l'une de l'autre et forment une fibre longitudinale et **en ce que** de tels ensembles parallèles sont prévus répartis sur la trajectoire périphérique autour du corps de remplissage.

15. Enveloppe de renforcement selon la revendication 1 ou 11, **caractérisée en ce que** les fibres longitudinales (4a, 4b, 4c) et/ou les fibres dans le sens transversal (5) sont des fils qui présentent des filaments rétractables, les filaments rétractables se rétractant d'une grandeur déterminée par rayonnement UV, la chaleur, le refroidissement ou par un stockage plus long.

16. Enveloppe de renforcement selon la revendication 15, **caractérisée en ce que** les fils contiennent des filaments à deux composants, dont les filaments individuels se composent d'au moins deux filaments partiels différents qui se composent de nouveau de deux différents polyesters/polymères.

17. Enveloppe de renforcement selon la revendication 1, **caractérisée en ce qu'**entre les fibres longitudinales (4a, 4b, 4c) ou en incluant celles-ci, les fibres longitudinales sont transformées de telle sorte que des champs filetés hexagonaux, rhomboïdaux, triangulaires, carrés ou ovales soient formés.

18. Enveloppe de renforcement selon l'une quelconque des revendications précédentes, **caractérisée en ce que** le tissu fileté est fabriqué sur un métier rectiligne, Rachel ou à fuseaux, des vitesses d'avancement commandées, divergentes des fibres longitudinales (4a, 4b, 4c) entraînant différentes réalisations longitudinales des fibres longitudinales (4a, 4b, 4c) et grâce à des vitesses d'alimentation se modifiant des fibres transversales (5), le modèle de tissu étant formé en tenant compte du développement longitudinal arqué ou ondulé du tissu.
